# EUROPEAN PATENT SPECIFICATION

(11) **EP 0 734 691 B1**
(45) Date of publication and mention of the grant of the patent: **05.06.2002**
(21) Application number: 96830148.1
(22) Date of filing: 26.03.1996
(51) Int. Cl.: A61C 1/00, C02F 1/50, C02F 1/76, C02F 1/68

(54) **A system for treating water in the water circuits of dental apparatus**
Wasserbehandlungssystem in Wasserleitungen von zahnärztlichen Geräten
Système de traitement de l'eau dans des conduits d'eau d'appareils dentaires

(30) Priority: 27.03.1995 IT BO950133
(43) Date of publication of application: 02.10.1996
(73) Proprietor: CASTELLINI S.p.A., I-40013 Castel Maggiore (Bologna) (IT)
(72) Inventor: Castellini, Franco, 40123 Bologna (IT)
(74) Representative: Lanzoni, Luciano

(56) References cited:
- EP-A- 0 537 119
- DE-A- 3 611 329
- DE-A- 3 629 010
- GB-A- 2 197 861
- GB-A- 2 270 846

## Description

The present invention relates to a system for treating water in the water circuits of dental apparatus, in particular to disinfect and prevent the formation of scale in the water, according to the preamble of claim 1. Such a system is known from GB-A-2 270 846.

In the technical sector relative to the development of dental apparatus, one of the most delicate and important factors is that relating to the overall disinfection of handpieces, of all circuits which supply the handpieces with fluids (here, in particular water or physiological solution) and of the water which is constantly supplied to the instruments - patient, that is to say, to the handpieces operating in the patient's mouth and the tubes for the supply of water to the rinsing tumbler.

For this purpose, methods and apparatus designed to resolve the afore-mentioned problem of disinfecting water circuits are known, using two different sterilising techniques, one with a continuous cycle and the other intermittent.

An example of the former appears in publication DE - 3.028.550, in which an attempt is made to resolve the said problem using apparatus which effects continuous disinfection and includes a container of liquid disinfectant connected to a liquid disinfectant dosing pump inside the tubes which supply the fluid to the equipment on the dental unit (i.e.: the handpieces, the rinsing tumbler, cuspidor, etc.). The pump is controlled by a control panel located on the dental unit so as to check the liquid disinfectant dose in the tubes, activated intermittently, that is to say, at intervals, depending on the quantity of water required by the equipment operating at that moment. The disadvantage of this device which, although operating with intermittent feed, effects a continuous disinfection of the water and the relative tubes, is that the disinfectant product, mixed with water at the moment in which it is fed into the water tubes, may come into contact with the walls of the oral cavity at high levels of concentration. As a result, the liquid disinfectant must be tolerable to the patient and so is not always effective for a final disinfection.

Another apparatus for the continuous disinfection of the tubes and the fluids supplied to the handpieces is described in patent DE - 3.611.329, in which a liquid disinfectant container is, again, envisaged and can have a plug which seals the container and is connected to the water mains which supply the dental unit; the container can be removed from the dental unit so that it may be filled with liquid disinfectant which is pumped into a mixing chamber, in which the water from the mains is effectively disinfected while the dental unit is switched on.

Similarly to the previous solution, the main problem relates to the disinfectant specifications of the liquid used, since it may come into contact with the patient's oral cavity; the container is also compact, since it is housed inside the base of the dental unit, and so must regularly be substituted or topped up by removing it from the base.

In contrast, the second method envisages the use of intermittent sterilisation, as illustrated in publication EP - 111.249, which envisages cutting off the water supply to the instruments using a cut-off valve, then opening the individual cut-off valves for the instruments, and then feeding a sterilising liquid into the water supply tube under pressure downstream of the main cut-off valve, after which the sterilising liquid feed is interrupted and the main cut-off valve opened to expel the polluted sterilising liquid from the water supply tube and to rinse the tubes before they are used for normal operation again. During this stage, the individual valves of the instruments are left open to allow the outfeed of the sterilising liquid and rinsing water from the tubes.

This apparatus can effect sterilisation even with relatively strong, efficient products, since the process is carried out when the instruments are not in use, for example at the end of the day, of a treatment session or at the end of the week.

However, even this apparatus is not without disadvantages, for example, the fact that a considerable amount of water (and time) are required to rinse the water supply tubes so that not even the slightest trace of sterilising liquid remains in them (this being extremely strong and so not tolerated by the patient). Moreover, even the quantity of sterilising liquid must be considerable in order to fill the entire water circuit and effectively disinfect the tubes in which particularly active and resistant pollutant deposits form as the water passes through them (the water is drinkable, but not entirely free of pathogens).

Another device with the intermittent cycle solution is described in patent EP - 317.521 by the Applicant, which envisages feeding a sterilising liquid into the water and/or air tubes downstream of their cut-off valves which are left closed, then feeding a fluid into the said tubes so as to remove the sterilising liquid. This solution reduced the amount of sterilising liquid required and, as a result, the time needed to complete the cycle, since only the ends of the water tubes nearest the instruments are involved.

In this solution, like the previous one, the sterilising operation is certainly more effective, although the amount of time and liquid required is not negligible, especially where there is a high number of patients.

It must also be remembered that, in all of the apparatus described until now, the problem of mains water hardness was never faced (varying from zone to zone, but always high, especially in urban centres), the said problem leading to the formation of scale in the tubes, control parts and the handpieces themselves.

For this reason, the Applicant has discovered that, by using a product which combines disinfectant and softening properties, fed into the tubes which supply the instruments with a continuous cycle, an extremely effective result is obtained with minimal doses, so that the product lasts much longer than that in the known types of apparatus described above.

The technical features of the present invention, in accordance with the aforesaid objects, are clearly illustrated in the claims herein, and the advantages of the said features are more clearly described in the detailed description below, with reference to the accompanying drawings, which illustrate an embodiment by way of example only, and in which:
- figure 1 is a diagram of part of a water circuit on a dental unit equipped with the water treatment system disclosed;
- figure 2 is a schematic view of a dissolution and dosing unit which is part of the water treatment system disclosed.

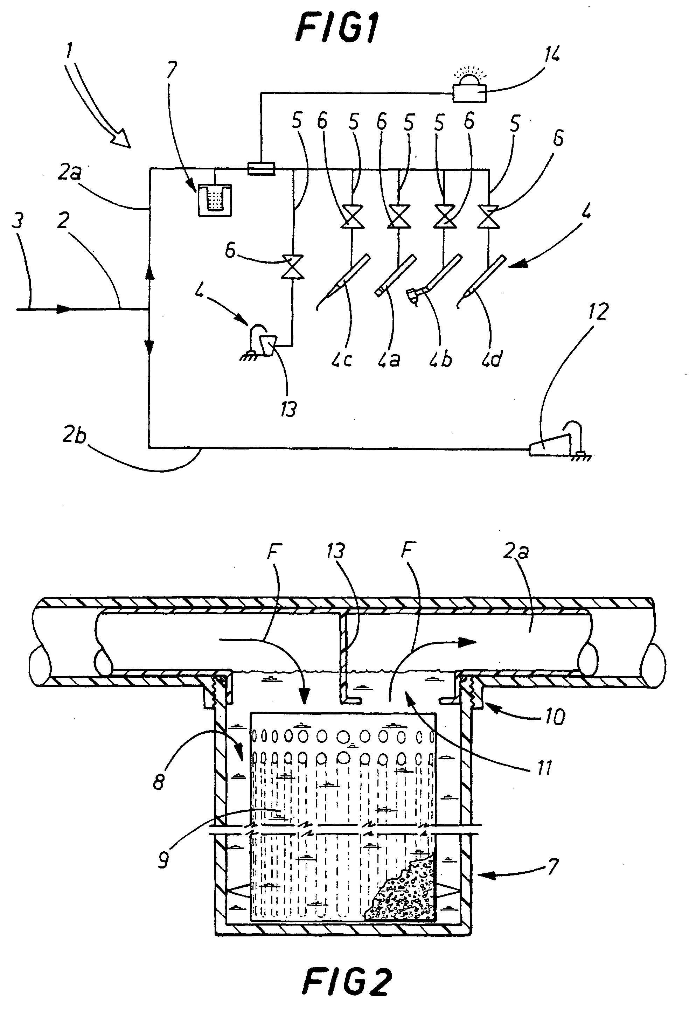

With reference to the accompanying drawings, and especially figure 1, the object of the system disclosed is the treatment of the water in a water circuit, labelled as whole by the number 1, present in dental apparatus such as the known dental units (all parts of which are not illustrated here, being of the known type).

Such dental units include a line 2 for the supply of water from a known water mains 3 to a series of instruments 4 consisting of a plurality of handpieces (shown here, by way of example only, by a turbine 4a, micro-motor 4b, syringe 4c, and a scaler 4d), as well as a tube supplying a rinsing tumbler 13. More specifically, in the solution disclosed, and as a result of the type of treatment and the type of structure by which it is carried out, the supply line 2 extends along two branches for the supply of water from the mains 3: the first 2a directly supplying the said instruments 4 (i.e.: those used for direct treatment in the oral cavity, also called instruments - patient), and the second 2b supplying the rest of the water circuit which supplies a cuspidor 12.

Each of the instruments 4 has relative branches 5 which connect the first supply branch 2a to the handpieces, to which the branches 5 lead. Each of the branches 5 has at least one water cut-off valve 6 which, when open, allows the water to flow to the instrument 4 when required.

The system disclosed operates in this context, comprising (see fig. 1), along the first branch 2a for the supply of water to the instruments - patient 4 and upstream of the branches 5, a solid product dissolution and dosing unit 7, the solid product usually being granular or powdered, and having those properties required to disinfect and soften water. To obtain a disinfectant and descaling effect, the product can be dosed in the water according to and in proportion to the water flow required by at least one of the instruments 4 activated: the concept of such a system is to continuously disinfect and to keep disinfected (and free of scale) the first branch 2a for the supply of water and, occasionally, the branch 5 relative to the instrument 4 activated, by mixing the product with water as it is drawn from the mains 3.

To do this, at the same time allowing the system to function automatically, a mixing unit 7 which functions according to the principle of dissolution is used. This includes (see figure 2) a hollow body 8 which houses a product cartridge 9 (permeable and refillable or replaceable), which can be connected to means 10 for connection to the first branch 2a for the supply of water; the cartridge 9 is, therefore, completely "immersed" in water supplied by the supply line 2 and the product dissolves in the solvent - water to create a solution which fills the body 8.

As already indicated, the unit 7 is positioned upstream of the branches 5 on the circuit of the dental unit 1, but downstream of the main supply line 2, so that the water mains 3 can supply separately, that is to say, along branch 2a, the instruments - patient 4 and the cuspidor 12, supplied by branch 2b.

Returning to the dissolution unit 7, branch 2a is divided by a diaphragm 13 which forces the water that passes through the tube to be diverted through the hollow body 8 and the solution contained in it (see arrow F); a measured passage 11 is envisaged between the diaphragm 13 and branch 2a, forming a kind of "Venturi tube" designed to draw a proportional, dosed quantity of the mixture below, depending on the amount required by the instrument 4. It is in this space that the mains water and the product are mixed to produce the afore-mentioned disinfectant and softening mixture.

The quantity of product dissolved by the unit 7 is such that, during normal operation, the correct disinfectant - softening effect is allowed, whilst if the water flow is drawn on the dental unit only after a given pause, that is to say, at the start of the treatment session or after long pauses, such as between patients, there may be a transitional operation in which the product is released in larger doses than during normal operation, thus creating an over-disinfectant effect in the water tubes for a limited period of time, then returning to the normal quantity of dissolved product: this effect can be determined, over time and according to the value, by adjusting the ratio between the amount of water which flows through the measured passage 11 and the volume of the body 8. In other words, by limiting the volume of the body 8, during normal operation, a dose calibrated to minimum parameters yet sufficient to maintain the required disinfectant effect is obtained and, during transitional operation, a more concentrated solution of the product is released into the water (for limited.periods), sufficient to guarantee an over-disinfectant effect, where required.

The structure of the unit 7 in the accompanying drawings is shown by way of example only and any dosing unit with the afore-mentioned specifications or suited to them may be used.

Such a system may use a product composed of the following substances whose proportions are calculated to form 100 grams of product:
- 50 g ± 25 g of a calcium and magnesium sequestrant, for example EDTA and derivatives, citrates and derivatives, tartrates and derivatives;
- a total of 10 g (- 5 g, + 10 g) of an active chlorine-based disinfectant, for example, chloroisocyanide, hypochlorites and other chlorine derivatives and/or a quaternary ammonium-based disinfectant, for example, benzalkoniumchloride, benzoxoniumchloride, cetyl trimethyl benzyl ammonium chloride and others;
- to make up the total 100 g, modifiers or organoleptic correctors, such as non-cariogenic, synthetic sweeteners, flavourings, colorants;
- 0.1 - 1.0 g of technological adjuvants.

Other substances may be added to these components, such as a further substance which acts as a marker and indicates the dosage, allowing an immediate check of the dosage of the substance along the first supply branch 2a: this marker is subjected to a check using a chemical detector, positioned along the branch 2a involved, which detects the presence or absence of the marker along the first branch 2a, and sends a relative signal to the dental unit, clearly visible to the dental surgeon (shown only schematically here, being of the know type, for example, a special LED 14 which remains unlit in the presence of the product and is lit by the device in the absence of the product or vice versa).

A further component which may be provided in order to obtain a more "isotonic" dosable product, more suited to medical requirements, is a so-called isotonic osmosis inducer, for example sodium chloride (NaCl), in a quantity which brings the osmotic pressure of the overall resulting solution to 8.9 g/l of sodium chloride, in distilled water, which is the mean osmotic pressure of human blood.

Such a system, therefore, fulfils the objects set, thanks to a very simple structure which does not radically change the arrangement of the water circuits in the dental unit. Another very important factor is the inclusion of the disinfection (with simultaneous "softening") in a continuous cycle with a solid granulated or powdered product, which allows the following relative to the solutions with liquid disinfectant:
- an accurate control of the dosable quantities of product to be fed into the water circuit in the dental unit, that is to say, the product is dissolved in a mixture in the container body and directly dosed by the water flow required each time by the instrument activated; this means that many litres of water can be treated with a relatively reduced total quantity of solid product, so that the intervals between substitution of the cartridge are relatively long (one month or more), also because the product is only fed into the supply branch reserved for the instruments used directly in the oral cavity or the rinsing tumbler, where the flow required is, in itself, limited;
- a high level of safety in the disinfection and softening of the water and water circuit;
- the treatment time and product efficiency is increasingly rapid and lies within the normal time required for activation of the handpiece without necessarily stopping the dental unit at all;
- the system with this structure also allows a stronger dose of the product in the supply branch when the dental unit is reactivated or after a given pause after activation of the instruments;
- the cartridge is substituted rapidly, easily and without the risk of contamination by the external surroundings.

## Claims

1. A system for treating water in water circuits (1) in dental apparatus, said apparatus including a line (2) for the supply of the said water from the water mains (3), the line (2) including at least a first supply branch (2a) for a plurality of instruments (4); said first supply branch (2a) having branches (5) connected to said instruments (4) for supplying the water to said instruments (4), the branches (5) having at least one corresponding water cut-off valve (6), the system further comprising, along the first water supply branch (2a) and upstream of the branches (5), a solid product dissolution and dosing unit (7) including a hollow body (8) which houses said product, **characterized in that** said first supply branch (2a) has a measured passage (11) for drawing a proportional dosed quantity of the dissolution from the hollow body, said passage connecting the body (8) to the first supply branch (2a) itself, said solid product having the properties for disinfecting and softening the water, said hollow body (8) being adapted for dosing the product in the water according to and in proportion to the water flow required by at least one of the instruments (4) activated, so that, during normal operation, a disinfectant and softening effect is obtained, and during operation in transitional periods a stronger dose is obtained.

2. The system according to claim 1 **characterised in that** the hollow body (8) houses a cartridge (9) of the said product and can be connected using means (10) to the supply branch (2a).

3. The system according to claim 1 or 2, **characterised in that** every 100 g of the product consist of the following:
a) 50 g ± 25 g of a calcium and magnesium sequestrant, for example EDTA and derivatives, citric acid and derivatives, tartaric acid and derivatives, polyphosphates and derivatives or equivalent substances;
b) a total of 10 g (- 5 g, + 10 g) of an active chlorine-based disinfectant, for example, chloroisocyanide, chloroamine, hypochlorites and other chlorine derivatives and/or a quaternary ammonium-based disinfectant, for example, benzalkoniumchloride, benzoxoniumchloride, cetyl trimethyl benzyl ammonium chloride and others
c) to make up the total 100 g, modifiers or organoleptic correctors, such as non-cariogenic, synthetic sweeteners, flavourings, colorants;
d) 0.1 - 1.0 g of technological adjuvants.

4. The system according to claim 3, **characterised in that**, in addition to the said substances from a) to d), another substance is envisaged, this being a marker which indicates the dosage, designed to allow an immediate check of the dosage; said substance being subjected to a control using a chemical detector which detects the presence/absence of the marker and sends a relative signal for the activation/disabling of the system.

5. The system according to claim 3, **characterised in that**, in addition to the said substances from a) to d), an osmolarity enhancer is envisaged, for example, sodium chloride, in a quantity which brings the osmotic pressure of the overall solution to a value of 8.9 g/l of sodium chloride in distilled water.

6. The system according to claim 1, **characterised in that** 100 g of the product consist of the following:
a) 50 g ± 25 g of a calcium and magnesium sequestrant, for example EDTA and derivatives, citric acid and derivatives, tartaric acid and derivatives, polyphosphates and derivatives or equivalent substances;
b) a total of 10 g (- 5 g, + 10 g) of an active chlorine-based disinfectant, for example, chloroisocyanide, chloroamine, hypochlorites and other chlorine derivatives and/or a quaternary ammonium-based disinfectant, for example, benzalkoniumchloride, benzoxoniumchloride, cetyl trimethyl benzyl ammonium chloride and others
c) to make up the total 100 g, modifiers or organoleptic correctors, such as non-cariogenic, synthetic sweeteners, flavourings, colorants:
d) 0.1 - 1.0 g of technological adjuvants;
e) a marker which indicates the dosage, designed to immediately check the dosage; said marker being subjected to a control using a chemical detector which detects the presence/absence of the marker and sends a relative signal for the activation/disabling of the system;
f) an osmolarity enhancer, for example, sodium chloride, in a quantity which brings the osmotic pressure of the overall solution to a value of 8.9 g/l of sodium chloride in distilled water.

## Patentansprüche

1. Wasserbehandlungssystem in Wasserleitungen (1) von zahnärztlichen Geräten, wobei die genannten Geräte eine Leitung (2) zum Zuführen des genannten Wassers aus dem Wassernetz (3) enthalten, wobei die Leitung (2) wenigstens eine erste Zweigleitung (2a) für eine Reihe von Instrumenten (4) enthält; wobei die genannte Zweigleitung (2a) Abzweigungen (5) aufweist, die an die genannten Instrumente (4) zum Zuführen von Wasser an die genannten Instrumente (4) selbst angeschlossen sind, wobei die Abzweigungen (5) wenigstens ein entsprechendes Absperrventil (6) für das Wasser enthalten, und wobei das System ausserdem entlang der ersten Zweigleitung (2a) für das Wasser und stromaufwärts der Abzweigungen (5) eine Lösungs- und Dosiereinheit (7) für ein festes Produkt enthält, beinhaltend einen Hohlkörper (8), welcher das genannte Produkte aufnimmt, **dadurch gekennzeichnet, dass** die genannte erste Zweigleitung (2a) einen dosierten Durchlauf (11) zur Entnahme einer proportional dosierten Menge der Lösung aus dem Hohlkörper aufweist, wobei der genannte Durchlauf den Körper (8) mit der ersten Zweigleitung (2a) selbst verbindet, wobei das genannte feste Produkt Eigenschaften zur Desinfektion und Enthärtung des Wassers aufweist, und wobei der genannte Hohlkörper (8) zur Dosierung des ins Wasser zu gebenden Produktes geeignet ist, und zwar je nach und im Verhältnis zu dem Wasserfluss, der von wenigstens einem der aktivierten Instrumente (4) gefordert ist, so dass während des normalen Betriebes eine desinfizierende und enthärtende Wirkung erreicht wird, und während des Übergangsbetriebes eine stärkere Dosis erhalten wird.

2. System nach Patentanspruch 1, **dadurch gekennzeichnet, dass** der Hohlkörper (8) eine Kartusche (9) des genannten Produktes enthält und unter Verwendung von Mitteln (10) an die Zweigleitung (2a) angeschlossen werden kann.

3. System nach Patentanspruch 1 oder 2, **dadurch gekennzeichnet, dass** 100 g Produkt aus folgender Zusammensetzung bestehen:
a) 50 g ± 25 g eines Kalzium- und Magnesium-Sequestranten, zum Beispiel EDTA und Derivate, Zitronensäure und Derivate, Weinsteinsäure und Derivate, Polyphosphate und Derivate oder äquivalente Substanzen;
b) eine Gesamtmenge von 10 g (- 5 g, + 10 g) eines aktiven Desinfektionsmittels auf der Basis von Chlorin, zum Beispiel Chloroisozyanid, Chloramine, Hypochloride und andere Chlorin-Derivate und/oder ein Desinfektionsmittel basierend auf Quartär-Ammonium, zum Beispiel Benzalkoniumchlorid, Benzoxioniumchlorid, Cetyl-Trimethyl-Benzyl-Ammonium-Chlorid und andere;
c) bis zu den gesamten 100 g Modifiziermittel oder organoleptische Korrektoren, wie nicht kariöse synthetische Süssmittel, Geschmacksmittel, Farbstoffe;
d) 0.1 - 1.0 g technologische Hilfsstoffe.

4. System nach Patentanspruch 3, **dadurch gekennzeichnet, dass** zusätzlich zu den genannten Substanzen von a) bis d) eine weitere Substanz vorgesehen ist, und zwar ein Markierer, welcher die Dosierung anzeigt, dazu bestimmt, eine unverzügliche Kontrolle der Dosierung zu erlauben; wobei die genannte Substanz einer Kontrolle durch einen chemischen Detektor unterzogen ist, welcher das Vorhandensein/Fehlen des Markierers erfasst und ein entsprechendes Signal zur Aktivierung/Entaktivierung des Systems aussendet.

5. System nach Patentanspruch 3, **dadurch gekennzeichnet, dass** zusätzlich zu den genannten Substanzen von a) bis d) einen Osmoseinduzierer vorgesehen ist, zum Beispiel Chlornatrium in einer Menge, welche den osmotischen Druck der gesamten Lösung auf einen Wert entsprechend 8.9 g/l Chlornatrium in destilliertem Wasser bringt.

6. System nach Patentanspruch 1, **dadurch gekennzeichnet, dass** 100 g Produkt aus folgender Zusammensetzung bestehen:
a) 50 g ± 25 g eines Kalzium- und Magnesium-Sequestranten, zum Beispiel EDTA und Derivate, Zitronensäure und Derivate, Weinsteinsäure und Derivate, Polyphosphate und Derivate oder äquivalente Substanzen;
b) eine Gesamtmenge von 10 g (- 5 g, + 10 g) eines aktiven Desinfektionsmittels auf der Basis von Chlorin, zum Beispiel Chloroisozyanid, Chloramine, Hypochloride und andere Chlorin-Derivate und/oder ein Desinfektionsmittel basierend auf Quartär-Ammonium, zum Beispiel Benzalkoniumchlorid, Benzoxioniumchlorid, Cetyl-Trimethyl-Benzyl-Ammonium-Chlorid und andere;
c) bis zu den gesamten 100 g Modifiziermittel oder organoleptische Korrektoren, wie nicht kariöse synthetische Süssmittel, Geschmacksmittel, Farbstoffe;
d) 0.1 - 1.0 g technologische Hilfsstoffe;
e) einem Markierer, welcher die Dosierung anzeigt, dazu bestimmt, unverzüglich die Dosierung zu kontrollieren; wobei der genannte Markierer einer Kontrolle durch einen chemischen Detektor unterliegt, welcher das Vorhandensein/Fehlen des Markierers erfasst und ein entsprechendes Signal zur Aktivierung/Entaktivierung des Systems aussendet;
f) einem Osmoseinduzierer, zum Beispiel Natriumchlorid in einer Menge, welche den osmotischen Druck der gesamten Lösung auf einen Wert entsprechend 8.9 g/l Chlornatrium in destilliertem Wasser bringt.

## Revendications

1. Un système de traitement de l'eau dans des conduits d'eau (1) d'appareils dentaires, lesdits appareils comprenant une ligne (2) d'alimentation de ladite eau depuis un réseau d'eau (3), la ligne (2) comprenant au moins une première ramification d'alimentation (2a) pour une série d'instruments (4) ; ladite première ramification d'alimentation (2a) ayant des ramifications (5) reliées aux instruments (4) susmentionnés pour alimenter en eau ces mêmes instruments (4), les ramifications (5) étant pourvues d'au moins une vanne d'arrêt de l'eau (6) correspondante, ledit système comprenant aussi, le long de la première ramification (2a) d'alimentation en eau et en amont des ramifications (5), un groupe (7) de dissolution et de dosage d'un produit solide comprenant un corps creux (8) qui contient ledit produit, **caractérisé en ce que** ladite première ramification d'alimentation (2a) a un passage mesuré (11) pour appeler une quantité proportionnelle et dosée de la dissolution hors du corps creux, ledit passage reliant le corps (8) à la première ramification d'alimentation (2a) elle-même, ledit produit solide ayant les propriétés nécessaires pour désinfecter et adoucir l'eau, ledit corps creux (8) étant conçu pour doser le produit dans l'eau en fonction de et proportionnellement au débit d'eau requis par au moins l'un des instruments (4) qui est activé, de sorte que, durant un fonctionnement normal, on obtient un effet désinfectant et adoucissant et, durant un fonctionnement en régime transitoire, un effet de surdosage.

2. Le système selon la revendication 1, **caractérisé en ce que** ledit corps creux (8) contient une cartouche (9) du produit susmentionné et peut être relié par l'intermédiaire de moyens (10) à la ramification d'alimentation (2a).

3. Le système selon la revendication 1 ou 2, **caractérisé en ce que** ledit produit est composé, pour chaque 100 g, de :
a) 50 g ± 25 g d'un agent séquestrant de calcium et magnésium, par exemple EDTA et dérivés, acide citrique et dérivés, acide tartarique et dérivés, polyphosphates et dérivés ou substances équivalentes ;
b) un total de 10 g (- 5 g, + 10 g) d'un désinfectant à base de chlore actif, par exemple, chloro-isocyanure, chloroamine, hypochlorites et autres dérivés du chlore et/ou un désinfectant à base d'ammonium quaternaire, par exemple, chlorure de benzalconium, chlorure de benzoxonium, chlorure de cétyl-triméthyl-benzyl-ammonium et autres ;
c) pour obtenir le total de 100 g, des agents modificateurs ou correcteurs organoleptiques, tels que des édulcorants synthétiques acariogènes, arômes, colorants ;
d) 0,1 - 1,0 g d'adjuvants technologiques.

4. Le système selon la revendication 3, **caractérisé en ce que**, outre lesdites substances des points de a) à d), une autre substance est prévue, à savoir un marqueur qui indique le dosage, destiné à permettre une vérification immédiate du dosage ; ladite substance étant contrôlée par l'intermédiaire d'un détecteur chimique qui détecte la présence/absence du marqueur et envoie un signal correspondant pour l'activation/désactivation du système.

5. Le système selon la revendication 3, **caractérisé en ce que**, outre lesdites substances des points de a) à d), un élévateur d'osmolarité est prévu, le chlorure de sodium par exemple, dans une quantité qui porte la pression osmotique de toute la solution à une valeur de 8,9 g/l de chlorure de sodium dans de l'eau distillée.

6. Le système selon la revendication 1, **caractérisé en ce que** ledit produit est composé, pour chaque 100 g, de :
a) 50 g ± 25 g d'un agent séquestrant de calcium et magnésium, par exemple EDTA et dérivés, acide citrique et dérivés, acide tartarique et dérivés, polyphosphates et dérivés ou substances équivalentes ;
b) un total de 10 g (- 5 g, + 10 g) d'un désinfectant à base de chlore actif, par exemple, chloro-isocyanure, chloroamine, hypochlorites et autres dérivés du chlore et/ou un désinfectant à base d'ammonium quaternaire, par exemple, chlorure de benzalconium, chlorure de benzoxonium, chlorure de cétyl-triméthyl-benzyl-ammonium et autres ;
c) pour obtenir le total de 100 g, des agents modificateurs ou correcteurs organoleptiques, tels que des édulcorants synthétiques acariogènes, arômes, colorants ;
d) 0,1 - 1,0 g d'adjuvants technologiques ;
e) un marqueur qui indique le dosage, destiné à vérifier immédiatement le dosage ; ledit marqueur étant contrôlé par l'intermédiaire d'un détecteur chimique qui en détecte la présence/absence et envoie un signal correspondant pour l'activation/désactivation du système ;
f) un élévateur d'osmolarité, le chlorure de sodium par exemple, dans une quantité qui porte la pression osmotique de toute la solution à une valeur de 8,9 g/l de chlorure de sodium dans de l'eau distillée.
